# EUROPEAN PATENT APPLICATION

(11) **EP 4 708 186 A1**
(43) Date of publication of application: **11.03.2026**
(21) Application number: 25182173.2
(22) Date of filing: 11.06.2025
(51) Int. Cl.: G06Q 40/04, G06Q 20/10

(54) **RESOURCE EXCHANGE PROCESSING METHOD AND APPARATUS, COMPUTER DEVICE, STORAGE MEDIUM, AND PROGRAM PRODUCT**

(30) Priority: 05.09.2024 SG 10202402770S
(71) Applicant: Gate Information Pte. Ltd., Singapore (SG)
(72) Inventor: Liu, Robin, Singapore (SG); Murphy, Bai, Singapore (SG); Wang, Tim, Singapore (SG)
(74) Representative: Wu, Ting

(57) **Abstract**

This application relates to a resource exchange processing method and apparatus, computer device, computer-readable storage medium and computer program product. The method includes: receiving a resource exchange request, and extracting resource exchange conditions and responder selection criteria contained within the request; determining an exchange responder that meets the resource exchange conditions and the responder selection criteria; and performing resource exchange with the exchange responder according to the resource exchange conditions.

## Description

### TECHNICAL FIELD

This application relates to the field of data processing technology, specifically to a resource exchange processing method and apparatus, computer device, computer-readable storage medium, and computer program product.

### BACKGROUND

With the rapid advancement of technology, there is an increasing reliance on digital lifestyles. Resource exchange over the network has adapted to this trend, providing a novel means of value storage and transfer that aligns with the digital age.

In traditional technology, a digital platform is typically provided for users participating in resource exchange. Users can delegate the resource exchange to the digital platform, and other users can exchange the resources that have been delegated to the platform.

However, in traditional methods, once resources are delegated to the digital platform, any user can exchange them, which makes the delegating party relatively passive and reduces the flexibility of the resource exchange, leading to a decrease in the volume of resources delegated to the digital platform. Consequently, the overall user engagement on the digital platform declines, and the utilization rate of the data processing resources allocated by the digital platform for resource exchange processes also decreases.

### SUMMARY

Based on this, it is necessary to address the above-mentioned technical issues by providing a resource exchange processing method and apparatus, computer device, computer-readable storage medium, and computer program product that can improve the resource utilization of the digital platform.

In the first aspect, this application provides a resource exchange processing method, which includes:
receiving a resource exchange request from a requester and extracting resource exchange conditions and responder selection criteria contained within the resource exchange request;
determining an exchange responder that meets the resource exchange conditions and responder selection criteria; and
performing a resource exchange between the requester and the exchange responder according to the resource exchange conditions.

In an embodiment, determining the exchange responder that meets the resource exchange conditions and the responder selection criteria includes:
determining candidate exchangers that meet the responder selection criteria;
displaying the resource exchange information corresponding to the resource exchange request to the candidate exchangers; and
determining, in response to responding operations of the candidate exchangers regarding the resource exchange information, the candidate exchanger that meets the resource exchange conditions as the exchange responder.

In an embodiment, determining the exchange responder that meets the resource exchange conditions and responder selection criteria includes:
determining, upon receiving candidate response information that meets the resource exchange conditions, a candidate responder corresponding to the candidate response information; and
if the candidate responder meets the responder selection criteria, determining the candidate responder as the exchange responder.

The method also includes: if the candidate responder does not meet the responder selection criteria, canceling the resource exchange request.

In an embodiment, if the candidate responder does not meet the responder selection criteria, canceling the resource exchange request includes:
monitoring the resource exchange result of the candidate response information in the current round of resource exchange if the candidate responder does not meet the responder selection criteria; and
canceling the resource exchange request if the resource exchange result indicates that the resource exchange was not successful.

In an embodiment, the responder selection criteria include a resource exchange risk threshold. After determining the candidate responder corresponding to the candidate response information, the method further includes:
obtaining a resource exchange risk assessment value of the candidate responder; and
if the resource exchange risk assessment value is below the resource exchange risk threshold, determining that the candidate responder meets the responder selection criteria.

In an embodiment, obtaining the resource exchange risk assessment value of the candidate responder includes:
obtaining at least one of the candidate responder's historical resource exchange behavior data, resource possession data, and historical gain data; and
performing a resource exchange risk assessment of the candidate responder based on at least one of the historical resource exchange behavior data, resource possession data, and historical gain data, to obtain the candidate responder's resource exchange risk assessment value.

In the second aspect, this application also provides a resource exchange processing apparatus, which includes:
a receiving module configured to receive a resource exchange request from a requester and extract resource exchange conditions and responder selection criteria contained within the request;
a determining module configured to determine an exchange responder that meets the resource exchange conditions and responder selection criteria; and
a resource exchange module configured to perform a resource exchange between the requester and the exchange responder according to the resource exchange conditions.

In the third aspect, this application also provides a computer device, which includes a memory and a processor. The memory stores a computer program, and the processor executes the computer program to implement the following steps:
receiving a resource exchange request from a requester and extracting the resource exchange conditions and responder selection criteria contained within the request;
determining an exchange responder that meets the resource exchange conditions and responder selection criteria; and
performing a resource exchange between the requester and the exchange responder according to the resource exchange conditions.

In the fourth aspect, this application also provides a computer-readable storage medium on which a computer program is stored. The computer program, when executed by a processor, cause the processor to perform the following steps:
receiving a resource exchange request from a requester, and extracting the resource exchange conditions and responder selection criteria contained within the request;
determining an exchange responder that meets the resource exchange conditions and the responder selection criteria; and
performing a resource exchange between the requester and the exchange responder according to the resource exchange conditions.

In the fifth aspect, this application also provides a computer program product, which includes a computer program. When executed by a processor, the computer program causes the processor to implements the following steps:
receiving a resource exchange request from a requester and extracting the resource exchange conditions and responder selection criteria contained within the request;
determining an exchange responder that meets the resource exchange conditions and responder selection criteria; and
performing a resource exchange between the requester and the exchange responder according to the resource exchange conditions.

According to the resource exchange processing method and apparatus, computer device, computer-readable storage medium, and computer program product described above, a resource exchange request is received first and resource exchange conditions and responder selection criteria contained within the request are extracted. Then, an exchange responder that meets the resource exchange conditions and responder selection criteria is determined. Subsequently, a resource exchange with the exchange responder is performed according to the resource exchange conditions. This approach allows the resource exchange requester to screen potential responders during the exchange process, giving the requester greater selectivity and initiative. As a result, this increases the willingness of users to delegate resources to the digital platform, enhances user engagement on the digital platform, and ultimately improves the digital platform's resource utilization.

### BRIEF DESCRIPTION OF THE DRAWINGS

To more clearly illustrate the technical solutions in the embodiments of this application or related technology, a brief introduction to the accompanying figures used in the descriptions of the embodiments or related technology is provided below. It is evident that the accompanying figures are merely some embodiments of this application. For those skilled in the art, other related figures may also be obtained without creative effort based on these figures.
Figure 1 is a schematic flow diagram of a resource exchange processing method according to an embodiment.
Figure 2 is a schematic flow diagram of step S20 as shown in figure 1 according to an embodiment.
Figure 3 is a schematic flow diagram of step S20 as shown in figure 1 according to another embodiment.
Figure 4 is a structural block diagram of a resource exchange processing apparatus according to an embodiment.
Figure 5 is an internal structural diagram of a computer device according to an embodiment.

### DETAILED DESCRIPTION

To clarify the purpose, technical solutions, and advantages of this application, a detailed elaboration is presented below with the figures and embodiments. It is worth noting that the embodiments described below are only for the purpose of clarifying this application and are not intended to limit the present application.

The terminologies used herein are for the purpose of describing specific embodiments only and are not intended to limit the application. As used herein, the singular forms "a", "an", and "the" may also include the plural forms, unless otherwise clearly indicated. It should also be understood that the terms "comprise" and "include" used herein specify the presence of stated features, steps, operations, elements, and/or components, but do not preclude the presence or addition of one or more other features, steps, operations, elements, components, and/or combinations thereof. It will be understood that the terms "first", "second", etc. used in this disclosure may be used herein to describe various elements, but these elements are not limited by these terms. These terms are only used to distinguish a first element from another element.

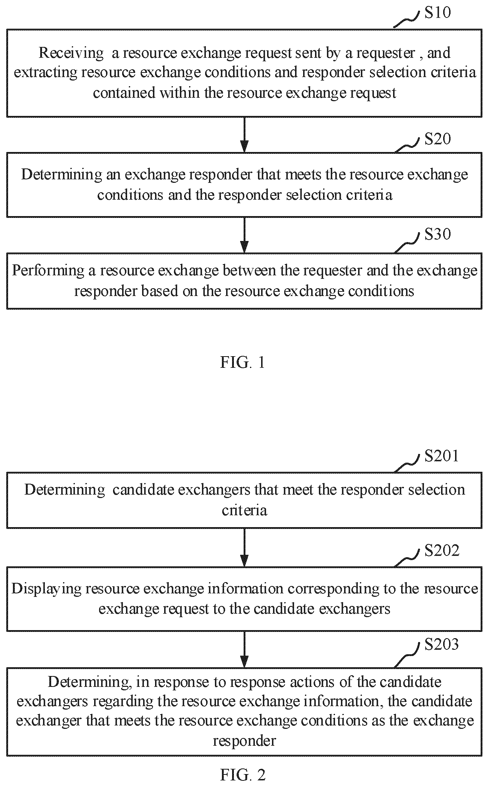

In some embodiments, as shown in Figure 1, a resource exchange processing method is provided. The method will be illustrated by taking the application of the method to a terminal as an example. The terminal can include but is not limited to personal computers, laptops, smartphones, Internet of Things (IoT) devices, and portable wearable devices. The IoT devices include smart speakers, smart TVs, smart air conditioners, smart in-car equipment, projectors, etc. The portable wearable devices include smart watches, smart bands, headsets, etc. The headsets include Virtual Reality (VR) devices, Augmented Reality (AR) devices, smart glasses, etc. Besides, this method can also be applied to a server. The method can also be applied to a system including servers and terminals, and the method can be realized via the interaction between the terminals and the servers. In the embodiments, the method includes the following steps S 10-S20.

In step S10, a resource exchange request sent by a requester through a first device is received, and resource exchange conditions and responder selection criteria contained within the request are extracted.

It is worth noting that the resource exchange refers to the exchange of resources owned between two parties. These resources include virtual resources and money, in which the virtual resources refer to digitized products such as cryptocurrencies, non-fungible tokens, and digital collectibles, etc. In this embodiment, the resource exchange can refer to the transaction of virtual resources, or in other words, the exchange of money and virtual resources between two parties.

The resource exchange processing method in this embodiment is applied in a digital platform for resource exchange, which runs on the above-mentioned terminal, server, or system. The digital platform refers to the digital platform for exchanging virtual resources, and on which users can buy, sell, exchange, and store all kinds of virtual resources. When users need to exchange resources, they can send exchange requests to the digital platforms via their equipment and wait for responses. The party sending the exchange request is the requester of resource exchange, while the party responding and completing the exchange with the requester is the exchange responder.

The resource exchange request contains exchange information, including at least the exchange conditions and responder selection criteria. The resource exchange conditions refer to the conditions required for the resource participating in the exchange, including at least one of the exchange price or amount. The responder selection criteria refer to the conditions the exchanger responder has to meet, including at least one of the user tier, resource exchange risk assessment value, exchange amount, resource possession, exchange fee, or gain rate.

Exemplarily, any user who needs to conduct a resource exchange can act as a resource exchange requester and send a resource exchange request to the digital platform through a first terminal device. The request contains resource exchange conditions and responder selection criteria for the exchange. The digital platform can receive the request sent by the requester through the first terminal device and extract the exchange conditions and responder selection criteria.

In step S20, an exchange responder that meets the resource exchange conditions and responder selection criteria is determined based on the response information.

Exemplarily, after the resource exchange conditions and responder selection criteria are determined, if candidate response information sent by any user to the digital platform is received, the exchange response conditions and requester selection criteria contained within the candidate response information can be extracted. The candidate response information refers to the resource request sent to the digital platform after the resource exchange request. Further, the exchange response conditions are compared with the resource exchange conditions, the requester selection criteria are compared with the requester information corresponding to the requester that sends the resource exchange request, and the responder selection criteria are compared with the candidate responder information corresponding to the responder that sends the candidate response information. If the exchange response conditions match the resource exchange conditions, the requester selection criteria match the requester information, and the responder selection criteria match the candidate responder information, the candidate responder sending the candidate response information is determined as the exchange responder; otherwise, if any condition is not met, the candidate responder will not be determined as the exchange responder, and the requester needs to wait for other candidate response information.

As an exemplary embodiment, after determining the resource exchange conditions and responder selection criteria, it is first queried whether there is pending exchange resource information in the digital platform that matches the determined resource exchange conditions and responder selection criteria. The pending exchange resource information refers to resource information that has already been sent to the digital platform for exchange before receiving the resource exchange request and has not yet been matched. If there's a matched pending exchange resource information, the exchange party of the pending exchange resource information can be further determined as the exchange responder. If there's no matched pending exchange resource information, the requester needs to wait for other users to send candidate response information to the digital platform.

It should be understood that the number of exchange responders in the present application may be one or more, without limitations specific to this in the present application.

In step S30: a resource exchange is performed between the requester and the exchange responder based on the resource exchange conditions.

Exemplarily, after the exchange responder is determined, the resource exchange between the requester and responder can be established and the resource can be exchanged between the resource exchange requester and the exchange responder based on the resource exchange conditions.

It can be understood that a match between the exchange response conditions and the resource exchange conditions means that the exchange response conditions at least partially overlap with the resource exchange conditions. If the overlapping part includes multiple possibilities, any one of these possibilities can be used to achieve the resource exchange while ensuring that the resource exchange conditions are met. The specific determination can be based on the actual situation. For example, the resource exchange can be based on the resource exchange conditions, the exchange response conditions, or the overall market situation, without specific limitations in the embodiments of this application. For example, suppose the resource exchange requester P1 sets to sell the owned resources at a price higher than V1. Later, user P2 submits an order to the digital platform to buy resources at a price lower than V2. The user P2 can act as the exchange responder and buy resources from the requester P1 at any price between V1 and V2. Alternatively, suppose the resource exchange requester P1 sets to buy resources at a price lower than V3. Later, user P2 submits an order to the digital platform to sell resources at a price lower than V4. In this case, the user P2 can act as the exchange responder and sell resources to the requester P1 at any price between V3 and V4.

In the above resource exchange processing method, first, a resource exchange request is received, and the resource exchange conditions and responder selection criteria contained within the request are extracted. Then, the exchange responder that meets the resource exchange conditions and responder selection criteria is determined. Finally, the resource exchange is performed between the requester and the exchange responder according to the resource exchange conditions. This achieves the selection of the exchange responder by the requester side during the resource exchange process, allowing more options and initiative in the resource exchange process for the requester, thereby enhancing the user's enthusiasm for entrusting resources to the digital platform, increasing the user activity of the digital platform, and thus improving the resource utilization rate of the digital platform.

In an exemplary embodiment, as shown in Figure 2, the process of determining an exchange responder that meets resource exchange conditions and responder selection criteria includes S201 to S203.

In step S201, candidate exchangers that meet the responder selection criteria are determined.

It should be noted that currently, the digital platform indiscriminately displays resource information delegated for exchange and has not yet achieved resource exchange to every user. This is intended to assist users in making resource exchange decisions. However, if the resource exchange requester sets responder selection criteria and only allows certain users to engage in resource exchanges, the indiscriminate display method will lead to situations where users who cannot engage in resource exchange can view the resource information but cannot make resource exchange. This may cause misunderstandings about the digital platform's functionality, reducing its trustworthiness and potentially decreasing user activity and resource utilization.

Exemplarily, after determining the responder selection criteria, if the criteria are empty, all users on the digital platform can be determined as candidate exchangers. If the responder selection criteria are not empty, user information of all users on the digital platform are retrieved first, and then the candidate exchangers that meet the responder selection criteria are determined based on each user's information.

In step S202, resource exchange information corresponding to the resource exchange request is displayed to the candidate exchangers.

Exemplarily, after determining the candidate exchangers, the resource exchange information corresponding to the resource exchange request can be publicly displayed to the candidate exchangers on the digital platform. In contrast, the resource exchange information will not be disclosed to other users who are not candidate exchangers, meaning that these users will not have access to the resource exchange information corresponding to the resource exchange request.

As an example, displaying the resource exchange information corresponding to the resource exchange request to the candidate exchangers may include adding the resource exchange information to a resource exchange pool corresponding to each candidate exchanger and displaying the resource exchange pool to each candidate exchanger.

The resource exchange pool refers to a collection of resource exchange information that users can view and transact with. Different users may have access to different pieces of resource exchange information, necessitating the maintenance of separate resource exchange pools for each user. Each user can only view the resource exchange information in their corresponding resource exchange pool and can only engage in exchanges based on that information. When there are changes in the resource exchange information within any user's resource exchange pool, such as the addition or withdrawal of resource exchange information, the resource exchange pool can be updated to reflect these changes, thereby presenting the updated resource exchange information to the user.

Exemplarily, after determining the candidate exchangers, the resource exchange information corresponding to the resource exchange request can be added to the resource exchange pool of each candidate exchanger. Subsequently, the resource exchange pool of each candidate exchanger can be updated to display the newly added resource exchange information.

In this embodiment, by maintaining different resource exchange pools for different users, updates and changes can be uniformly managed after new resource exchange information is added. This way, users do not need to repeatedly match information each time they query delegated information, improving operational efficiency.

In step S203, in response to responding operations of the candidate exchangers regarding the resource exchange information, the candidate exchanger that meets the resource exchange conditions is determined as the exchange responder.

Exemplarily, after displaying the resource exchange information corresponding to the resource exchange request to the candidate exchangers, any candidate exchanger can perform a response action regarding the resource exchange information, such as selecting to engage in resource exchange corresponding to the resource exchange request. The digital platform, upon detecting a response action to the resource exchange information, can extract the exchange response conditions from the response action and check if the exchange response conditions match the resource exchange conditions. Since the response action is executed concerning the resource exchange information, it can be assumed that both the responder selection criteria and the requester selection criteria are satisfied without needing further verification. If the exchange response conditions match the resource exchange conditions, the candidate exchanger is determined as an exchange responder. If the exchange response conditions do not match the resource exchange conditions, the candidate exchanger is not determined as an exchange responder, and other responding operations are continued to be awaited.

In this embodiment, by only displaying resource exchange information to candidate exchangers that meet the responder selection criteria, selective display of resource exchange requests is achieved, thus avoiding situations where resources are visible but not exchangeable. This enhances the trustworthiness of the digital platform for resource exchange, thereby increasing user activity and the utilization of resources on the digital platform.

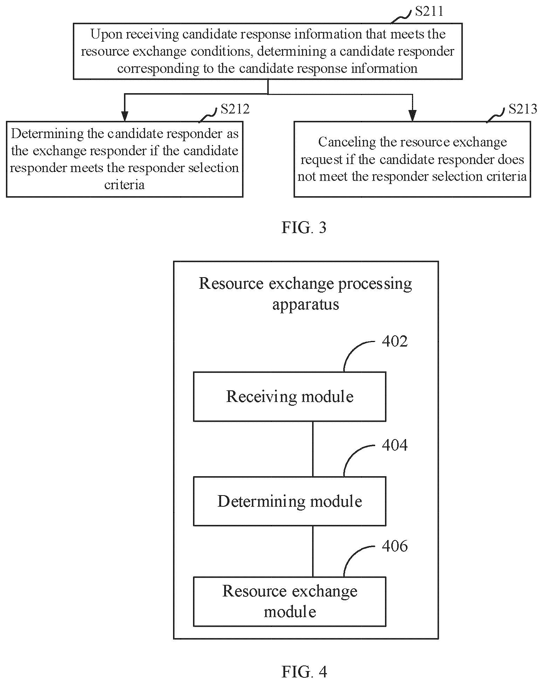

In another exemplary embodiment, as shown in Figure 3, the process of determining the exchange responder that meets the resource exchange conditions and responder selection criteria includes the following steps S211 to S212.

In step S211, upon receiving candidate response information that meets the resource exchange conditions, the candidate responder corresponding to the candidate response information is determined.

It should be noted that after receiving a resource exchange request, any user, regardless of whether they can view the resource exchange information corresponding to the request, can send candidate response information to the digital platform. This means that users who do not meet the responder selection criteria may still submit candidate response information based on their own analysis, etc.

If a user who does not meet the responder selection criteria submits candidate response information that matches the resource exchange conditions, since they do not meet the responder selection criteria, they will not be able to view or engage in resource exchange with the resource exchange requester. However, if this candidate response information ultimately does not lead to a resource exchange with any requester, it will be converted to pending exchange resource information and delegated to the digital platform for processing. In this case, users who can view both the resource exchange information corresponding to the request and the pending exchange resource information will see two resource pieces that appear to be available for exchange but are not actually exchanged, potentially leading to misunderstandings about the functionality or stability of the digital platform, thus affecting user experience and lowering trust.

Exemplarily, after receiving the resource exchange request, if candidate response information sent by any user to the digital platform is received, the exchange response conditions are first extracted from the candidate response information and it is determined whether these exchange response conditions match the resource exchange conditions. If they match, the candidate response information is deemed to meet the resource exchange conditions, and the corresponding candidate responder is determined. If they do not match, there is no need to verify the responder selection criteria or perform other operations; even if both the exchange response conditions and the resource exchange conditions exist simultaneously, no misunderstanding will arise.

In step S212, if the candidate responder meets the responder selection criteria, the candidate responder is determined as the exchange responder.

Exemplarily, after determining the candidate responder, it is determined whether the candidate responder meets the responder selection criteria based on the candidate response information. If it is determined that the candidate responder meets the responder selection criteria based on the candidate response information, then the candidate responder is determined as the exchange responder.

After determining the candidate responder corresponding to the candidate response information, the method further includes step S213.

In step S213, if the candidate responder does not meet the responder selection criteria, the resource exchange request is canceled.

Exemplarily, after determining the candidate responder, it is determined whether the candidate responder meets the responder selection criteria based on the candidate response information. If it is determined that the candidate responder does not meet the responder selection criteria based on the candidate response information, the resource exchange request is returned to the resource exchange requester.

As an example, after the resource exchange request is canceled, a cancellation notification can also be sent to the resource exchange requester to remind the requester to re-manage the resources in the resource exchange request.

In this embodiment, by canceling the resource exchange request, it not only prevents the resource exchange requester from transferring resources to users other than the designated responder, but also ensures the orderly transfer of resources on the digital platform. This avoids situations where users see resources that appear to be available for exchange but, in reality, are not, thereby increasing the platform's trustworthiness and enhancing user engagement as well as the resource utilization on the digital platform.

In an exemplary embodiment, the process of canceling the resource exchange request if the candidate responder does not meet the responder selection criteria includes the following steps S2131 to S2132.

In step S2131, if the candidate responder does not meet the responder selection criteria, the resource exchange result of the candidate response information in the current round of resource exchange is monitored.

After any user submits candidate response information, this information will be matched with every resource exchange request and pending exchange resource information on the digital platform. The resource exchange result of the current round of resource exchange refers to the result of whether to exchange resource after a maximum of one match between the candidate response information and all current resource exchange requests as well as pending exchange resource information on the digital resource exchange platform. For example, suppose there are 10 resource exchange requests and pending exchange resource information on the digital platform. If a match is successful during the matching with the 4th resource exchange request or pending exchange resource information and a resource exchange has been achieved, then the resource exchange result of the current round is determined as successful. However, if no resource exchange is achieved after matching with all 10 resource exchange requests and pending exchange resource information, the resource exchange result of the current round is determined as unsuccessful.

Exemplarily, after determining the candidate responder, it is determined whether the candidate responder meets the responder selection criteria based on the candidate response information. If it is determined that the candidate responder does not meet the responder selection criteria, the resource exchange result of the candidate response information in the current round of resource exchange is monitored.

In step S2132, if it is determined that the exchange result is that the resource exchange is unsuccessful, the resource exchange request is canceled.

Exemplarily, if the resource exchange result is unsuccessful, then the candidate response information is converted into pending exchange resource information. In that case, there are two pieces of resource information that available for exchange but are not actually exchanged on the digital platform. The failure to exchange is caused by the requester, so the resource exchange request can be canceled to avoid such situations. If the resource exchange result is successful, there will not be two pieces of resource information that available for exchange but are not actually exchanged on the digital platform. Therefore, the resource exchange request does not need to be canceled.

In this embodiment, the resource exchange request is canceled if the resource exchange result is unsuccessful. This can prevent users who can view both the resource exchange information corresponding to the resource exchange request and the pending exchange resource information corresponding to the candidate response information from being confused and mistakenly thinking that there is a malfunction in the digital platform, thereby ensuring the orderly operation of the digital platform and improving user experience. On the other hand, if the resource exchange result is successful, the resource exchange request will not be canceled, reducing unnecessary cancellation operations and preventing resource wastage.

In an exemplary embodiment, the responder selection criteria include a resource exchange risk threshold. After determining the candidate responder corresponding to the candidate response information, the method further includes:
obtaining a resource exchange risk assessment value of the candidate responder; and
determining, if the resource exchange risk assessment value is lower than the resource exchange risk threshold, that the candidate responder meets the responder selection criteria.

The resource exchange risk assessment value refers to the evaluated likelihood of incurring a loss when engaging in resource exchange with the candidate responder. The resource exchange risk assessment value of each user can be determined based on at least one characteristic of user level, resource exchange volume, resource possession, historical resource exchange fee rate, historical gain rate, etc. The resource exchange risk assessment value can include a probability value or a risk level. For example, assume that a risk assessment is conducted for user A, and it is determined that there is an 80% probability of incurring a loss when engaging in a resource exchange with the user A. If the total number of users is 100, and the preset risk levels include levels 1 to 5, with 60 users at level 1, 20 users at level 2, 10 users at level 3, 5 users at level 4, and 5 users at level 5. The probability values of all 100 users are ranked from high to low, and the probability value of the user A is ranked 7th. Therefore, the user A's resource exchange risk assessment value could be 80% or level 4.

Exemplarily, after determining the candidate responder, the resource exchange risk assessment value of the candidate responder is obtained. The resource exchange risk assessment value is then compared with the resource exchange risk threshold. If the resource exchange risk assessment value is lower than the resource exchange risk threshold, it is determined that the candidate responder meets the responder selection criteria. If the resource exchange risk assessment value is greater than or equal to the resource exchange risk threshold, it is determined that the candidate responder does not meet the responder selection criteria.

In an exemplary embodiment, obtaining the resource exchange risk assessment value of the candidate responder includes:
obtaining at least one of 'historical resource exchange behavior data, resource possession data, or historical gain data of the candidate responder; and
performing a resource exchange risk assessment for the candidate responder based on the at least one of the historical resource exchange behavior data, resource possession data, and historical gain data, to obtain the resource exchange risk assessment value of the candidate responder.

The historical resource exchange behavior data refers to the behavioral data generated from the candidate responder's historical participation in resource exchanges, including at least one of the total resource exchange volume of historical resource changes, average resource exchange volume of the historical resource exchanges, and average fee rate of the historical resource exchanges. The resource possession data refers to the total amount of virtual resources or the total value of all resources currently held by the candidate responder. The historical gain data is configured to represent the average gain obtained by the candidate responder in the historical resource exchanges.

Exemplarily, at least one of the historical resource exchange behavior data, resource possession data, and historical gain data of the candidate responder can be obtained. Subsequently, the at least one of the historical resource exchange behavior data, resource possession data, and historical gain data obtained is input into a pre-trained resource exchange risk assessment model. The resource exchange risk assessment model is configured to evaluate the resource exchange risk of the candidate responder based on at least one of the historical resource exchange behavior data, resource possession data, and historical gain data obtained, and output a resource exchange risk assessment value. The resource exchange risk assessment model can be a statistical model, a neural network model, or the like, and can be chosen and trained according to actual circumstances. This embodiment does not impose any restrictions on the selection or training of the model.

In this embodiment, the quality of a user's resource exchange strategy can be accurately evaluated through historical resource exchange behavior data, resource possession data, and historical gain data. Engaging in resource exchange with users who have superior resource exchange strategies is more likely to result in losses. Therefore, the accuracy of resource exchange risk assessment can be improved based on historical resource exchange behavior data, resource possession data, and historical gain data.

The following explanation clarifies that despite the steps in the flowcharts involved in the above embodiments are shown sequentially according to the direction of the arrows, these steps are not necessarily executed strictly in the order indicated by the arrows. Unless explicitly stated otherwise in this document, the execution of these steps is not strictly limited to a specific order and can be performed in a different sequence. Additionally, at least a part of the steps in the flow diagrams of the above-mentioned embodiments can include multiple steps or stages. These steps or stages are not necessarily completed at the same time but can be executed at different times. The execution order of these steps or stages is also not necessarily sequential but can be interchanged or alternated with other steps or at least a part of other steps or stages.

Based on the same inventive concept, the embodiments of this application also provide a resource exchange processing apparatus for implementing the resource exchange processing method mentioned above. The solution for solving the problem provided by this apparatus is similar to the solution described in the above-mentioned method. Therefore, the specific limitations of one or more embodiments of the resource exchange processing apparatus provided below can be referred to in the limitations of the resource exchange processing method mentioned above and will not be reiterated here.

In an exemplary embodiment, as shown in Figure 4, a resource exchange processing apparatus is provided, which includes: a receiving module 402, a determining module 404, and a resource exchange module 406.

The receiving module 402 is configured to receive a resource exchange request and extract resource exchange conditions and responder selection criteria contained within the resource exchange request.

The determining module 404 is configured to determine an exchange responder that meets the resource exchange conditions and responder selection criteria.

The resource exchange module 406 is configured to conduct a resource exchange with the exchange responder based on the resource exchange conditions.

In an exemplary embodiment, the determining module 404 is further configured to:
determine candidate exchangers that meet the responder selection criteria;
display resource exchange information corresponding to the resource exchange request to the candidate exchangers; and
determine the candidate exchanger that meets the resource exchange conditions as the exchange responder, in response to responding operations of the candidate exchanger regarding the resource exchange information.

In an exemplary embodiment, the determining module 404 is further configured to:
determine the candidate responder corresponding to the candidate response information, upon receiving candidate response information that meets the resource exchange conditions; and
determine the candidate responder as the exchange responder, if the candidate responder meets the responder selection criteria.

The resource exchange processing apparatus also includes a canceling module, which is configured to:
cancel the resource exchange request when the candidate responder does not meet the criteria.

In an exemplary embodiment, the canceling module is further configured to:
monitor the resource exchange result of the candidate response information in the current round of resource exchange if the candidate responder does not meet the responder selection criteria; and
cancel the resource exchange request when the monitored resource exchange result indicates that the resource exchange was not successful.

In an exemplary embodiment, the responder selection criteria include a resource exchange risk threshold. After determining the candidate responder corresponding to the candidate response information, the determining module 404 is further configured to:
obtain a resource exchange risk assessment value of the candidate responder; and
determine that the candidate responder meets the responder selection criteria when the resource exchange risk assessment value is below the resource exchange risk threshold.

In an exemplary embodiment, the determining module 404 is further configured to:
obtain at least one of historical resource exchange behavior data, resource possession data, and historical gain data of the candidate responder; and
perform a resource exchange risk assessment for the candidate responder based on the at least one of the historical resource exchange behavior data, resource possession data, and historical gain data, to obtain resource exchange risk assessment value of the candidate responder.

The various modules in the above-mentioned resource exchange processing apparatus can be implemented entirely or partially through software, hardware, or a combination of both. These modules may be embedded in as hardware or exist independently within a processor of a computer device. Alternatively, these modules can be stored as software in a memory of a computer device, so as to be invoked by the processor to perform the operations corresponding to each module.

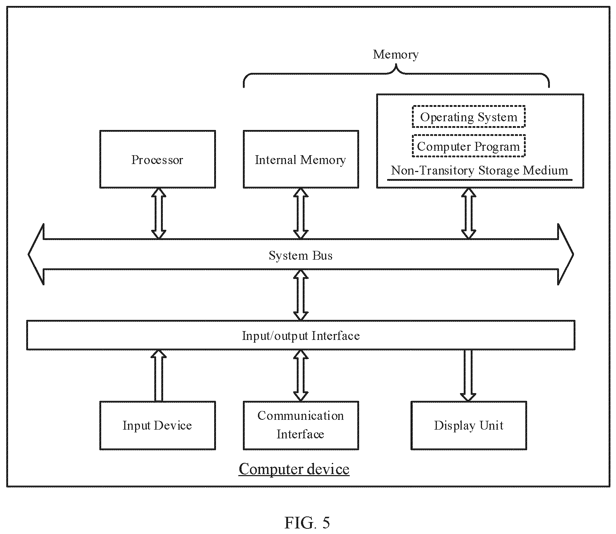

In an exemplary embodiment, a computer device is provided, which may be a terminal, and its internal structure is shown in Figure 5. The computer device includes a processor, memory, input/output (I/O) interface, communication interface, display unit, and input device. The processor, memory, and I/O interface are connected via a system bus, while the communication interface, display unit, and input device are connected to the system bus through the I/O interface. The processor of the computer device provides computational and control capabilities. The memory of the computer device consists of non-transitory storage medium and internal memory. The non-transitory storage medium stores the operating system and computer programs. The internal memory provides an environment for the running of the operating system and computer programs stored in the non-transitory storage medium. The I/O interface of the computer device is configured for the exchange of information between the processor and external devices. The communication interface of the computer device is configured to be in wired or wireless communication with external terminals. The wireless communication can be achieved through WiFi, mobile cellular networks, Near Field Communication (NFC), or other technologies. When executed by the processor, the computer program implements a resource exchange processing method. The display unit of the computer device is configured to form visually perceivable images and can be a display screen, projection device, or virtual reality device. The display screen may be an LCD or e-ink display. The input device of the computer device can be a touch layer overlaid on the display screen, buttons, a trackball, or a touchpad located on the computer device's casing, or external peripherals like a keyboard, touchpad, or mouse.

Those skilled in the art can understand that the structure shown in Figure 5 is merely a block diagram of parts of the structure related to the present application and does not limit the computer device to which the solution of the present application applies. The specific computer device may include more or fewer components than shown in the figure, or some components may be combined, or the components may be arranged differently.

In an embodiment, a computer device is provided, including a memory and a processor. The memory stores a computer program and the processor implements the steps in the above-mentioned embodiments when executing the computer program.

In an embodiment, a computer-readable storage medium is provided, in which a computer program is stored. When the computer program is executed by the processor, the steps in the above-mentioned embodiments are implemented.

In an embodiment, a computer program product is provided, including a computer program. When the computer program is executed by the processor, the steps in the above-mentioned embodiments are implemented.

It should be noted that the user information (including but not limited to user device information, user personal information, etc.) and data (including but not limited to data used for analysis, stored data, displayed data, etc.) involved in this application are authorized by the user or all parties, and the collection, use and processing of relevant data comply with related regulations.

Those of ordinary skilled in the art can understand that all or part of the processes of the methods in the above-mentioned embodiments can be implemented by instructing related hardware through the computer program. The computer program can be stored in a non-transitory computer-readable storage medium. When the computer program is executed, the processes of the methods in the above-mentioned embodiments can be performed. Any reference to memory, database or other medium used in the embodiments in this application may include at least one of non-transitory memory and transitory memory. Non-transitory memory may include read-only memory (ROM), magnetic tape, floppy disk, flash memory, optical memory, high-density embedded NVM, resistive random access memory (ReRAM), magnetoresistive random access memory (MRAM), ferroelectric random access memory (FRAM), phase change memory (PCM), graphene memory, etc. Transitory memory may include random access memory (RAM), external cache memory, etc. By way of example and without limitation, RAM can be in various forms, such as static random access memory (SRAM) or dynamic random access memory (DRAM). The database involved in each embodiment provided in this application may be a relational database or a non-relational database. The non-relational database may include a distributed database based on blockchain, etc., but is not limited thereto. The processor involved in the embodiments in this application may be a general-purpose processor, a central processing unit, a graphics processor, a digital signal processor, a programmable logic device, a data processing logic device based on quantum computing, an artificial intelligence (AI) processor, etc., but is not limited thereto.

## Claims

1. A resource exchange processing method, comprising:
receiving a resource exchange request sent by a requester through a first device, and extracting resource exchange conditions and responder selection criteria contained within the resource exchange request (S10);
determining an exchange responder that meets the resource exchange conditions and the responder selection criteria (S20); and
performing a resource exchange between the requester and the exchange responder based on the resource exchange conditions(S30).

2. The method according to claim 1, wherein determining the exchange responder that meets the resource exchange conditions and the responder selection criteria comprises:
determining candidate exchangers that meet the responder selection criteria (S201);
displaying resource exchange information corresponding to the resource exchange request to the candidate exchangers (S202); and
determining, in response to responding operations of the candidate exchangers regarding the resource exchange information, the candidate exchanger that meets the resource exchange conditions as the exchange responder (S203).

3. The method according to claim 1, wherein determining the exchange responder that meets the resource exchange conditions and responder selection criteria comprises:
determining, upon receiving candidate response information that meets the resource exchange conditions, a candidate responder corresponding to the candidate response information (S211); and
if the candidate responder meets the responder selection criteria, determining the candidate responder as the exchange responder (S212); or
canceling the resource exchange request if the candidate responder does not meet the responder selection criteria (S213).

4. The method according to claim 3, wherein canceling the resource exchange request if the candidate responder does not meet the responder selection criteria comprises:
monitoring resource exchange result of the candidate response information in a current resource exchange round if the candidate response does not meet the responder selection criteria; and
canceling the resource exchange request if the exchange result indicates that the resource exchange is unsuccessful.

5. The method according to claim 3, wherein the responder selection criteria comprise a resource exchange risk threshold; and after determining the candidate responder corresponding to the candidate response information, the method further comprises:
obtaining a resource exchange risk assessment value of the candidate responder; and
determining that the candidate responder meets the responder selection criteria if the resource exchange risk assessment value is below the resource exchange risk threshold.

6. The method according to claim 5, wherein obtaining the resource exchange risk assessment value of the candidate responder comprises:
obtaining at least one of historical resource exchange behavior data, resource possession data, or historical gain data of the candidate responder; and
performing a resource exchange risk assessment for the candidate responder based on the at least one of the historical resource exchange behavior data, the resource possession data, or the historical gain data, to obtain the resource exchange risk assessment value of the candidate responder.

7. A computer device configured to carry out the method of any of claims 1 to 6.

8. A computer-readable storage medium comprising a computer program stored therein, wherein the computer program, when executed by a processor, causes the processor to perform steps of the method as according to any of claims 1 to 6.

9. A computer program product comprising a computer program, wherein the computer program, when executed by a processor, causes the processor to perform steps of any method described in claims 1 to 6.
